# EUROPEAN PATENT SPECIFICATION

(11) **EP 0 645 549 B1**
(45) Date of publication and mention of the grant of the patent: **01.04.1998**
(21) Application number: 94202532.1
(22) Date of filing: 05.09.1994
(51) Int. Cl.: F16D 3/24

(54) **Universal joint**
Universalgelenk
Joint universel

(30) Priority: 29.09.1993 GB 9320098
(43) Date of publication of application: 29.03.1995
(73) Proprietor: Delphi France Automotive Systems, 92257 La Garenne-Colombes (FR)
(72) Inventor: Constantin, Thierry Didier, F-92110 Clichy (FR)
(74) Representative: Denton, Michael John

(56) References cited:
- DE-A- 3 143 062
- DE-B- 2 430 027
- DE-B- 2 522 670
- US-A- 3 310 960

## Description

This invention relates to a universal joint for the transmission of torque between two rotatable shafts. The present invention has particular application in motor vehicles, and in particular for providing drive to steerable driven wheels on a motor vehicle.

It is well known to provide a universal joint of the Rzeppa type between two rotatable joint. A Rzeppa joint is a constant velocity joint which typically comprises an inner race connectable to one shaft, an outer race connectable to the other shaft, and a number of balls retained in a ball cage between the two races. This type of joint provides for transmission of torque between the two shafts such that the torque input and torque output are substantially constant up to an angle of approximately 42° between the two shafts, beyond which the torque output starts to decrease relative to the torque input. At an angle of approximately 45°, the shaft connected to the inner race comes into contact with the outer race to prevent further increases in the angle between the two shafts.

There is a need to provide a universal joint which will allow for angles between the shafts of up to approximately 60°. The above mentioned Rzeppa joints could be modified by chamfering the outer edge of the outer race to allow for greater angles. However, such a modification reduces the running area for the balls, and weakens the outer race. US Patent No. 3,310,960 discloses a high angle, constant velocity, universal joint which consists of a Rzeppa joint integrated in a ball joint. This arrangement is complicated and expensive to produce, and would require an additional ball cage for the numerous outer balls in order to retain the balls in the joint.

It is also well known to provide a universal joint of the tripot type between two rotatable shafts. A tripot joint typically comprises an outer housing connectable to one shaft, an inner housing connectable to the other shaft, and trunnions connected to the inner housing and axially slidable and tiltable in channels in the outer housing. In a tripot joint, the output speed fluctuates sinusoidally relative to the input speed, with the pitch of the sinusoidal wave increasing as the angle between the shafts increases.

It is an object of the present invention to provide a universal joint which will allow for angles between the shafts of up to approximately 60°, but which overcomes the above mentioned disadvantages.

To this end, a universal joint in accordance with the present invention comprises a Rzeppa joint, as herein defined, connectable to one shaft, and a tripot joint, as herein defined, connectable to the other shaft, the tripot joint being positioned around the Rzeppa joint with the Rzeppa joint and the tripot joint being substantially concentric.

A Rzeppa joint is defined as comprising an inner race connectable to one shaft; an outer race which is substantially annular and positioned around the inner race; a ball cage position between the inner and outer races; and a number of balls retained by the ball cage and rotatable in corresponding grooves in the inner and outer races to allow the inner race to pivot relative to the outer race.

A tripot joint is defined as an inner housing which is substantially annular; an outer housing which is substantially annular, positioned around the inner housing, and connectable to the other shaft; and a number of trunnions which are substantially cylindrical, which are secured to the inner housing, which extend radially, and which can slide and tilt in corresponding channels in the outer housing to allow the inner housing to pivot relative to the outer housing.

Preferably, the outer race of the Rzeppa joint and the inner housing of the tripot joint are integrally formed. Preferably, the inner housing can only pivot relative to the outer housing when the angle between the two shafts exceeds approximately 45°.

A universal joint for transmitting torque between two rotatable shafts in accordance with the present invention comprises an inner race connectable to one of the shafts; a substantially annular outer race surrounding the inner race and pivotable relative to the inner race; a ball cage positioned between the inner and outer races; a plurality of balls retained by the ball cage and rotatable in corresponding grooves in the inner and outer races; a substantially annular inner housing secured to and surrounding the outer race; a substantially annular outer housing surrounding the inner housing and connectable to the other shaft, the inner housing being pivotable relative to the outer housing; and a number of substantially cylindrical trunnions secured to the inner housing, extending in a radial direction towards the outer housing, and slidable and tiltable in axially extending channels in the outer housing; wherein the inner race, the outer race, the inner housing, and the outer housing are substantially concentric.

The outer race and the inner housing are preferably integrally formed.

Preferably, the inner housing can only pivot relative to the outer housing when the angle between the two shafts exceeds approximately 45°. In this case, a resilient mounting means is preferably secured to the inner and outer housings to restrict the pivotal movement of the inner housing relative to the outer housing. The outer housing is preferably substantially cup-shaped and has a base and an annular wall upstanding from the base, the inner housing being positioned inside and adjacent the wall, the resilient mounting means being secured to the base and to the inner housing. The resilient mounting means is preferably a laminate comprising a first layer adjacent the base and a second layer adjacent the inner housing, wherein the second layer is harder than the first layer. In this case, the first layer is preferably of elastomeric material, and the second layer is preferably of steel.

The present invention will now be described, by way of example, with reference to the accompanying drawings, in which:-
Figure 1 is a cross-section of a universal joint in accordance with the present invention, taken on the line I-I of Figure 2; and
Figure 2 is a cross-section taken on the line II-II of Figure 1.

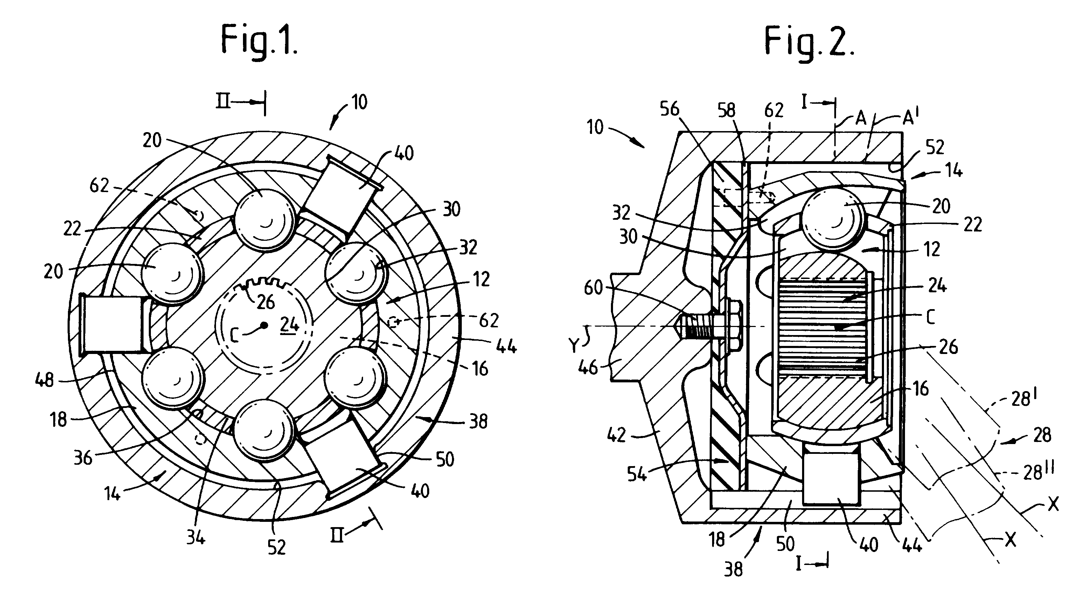

Referring to the drawings, the universal joint 10 comprises a Rzeppa joint 12 and a tripot joint 14, with the tripot joint being positioned around the Rzeppa joint with the Rzeppa joint and the tripot joint being substantially concentric. The Rzeppa joint 12 comprises an inner race 16, an outer race 18, a plurality of balls 20, and a ball cage 22. The inner race 16 is substantially annular and has a bore 24 which has a longitudinal axis X and a splined surface 26. The splined surface 26 allows the inner race 16 to be connected to, and rotate with, a first shaft 28 (Figure 2) which is rotatable about the longitudinal axis X. The outer race 18 is substantially annular and surrounds the inner race 16. The balls 20 are positioned in corresponding grooves 30,32 in the outer surface 34 of the inner race 16 and the inner surface 36 of the outer race 18 respectively, and are free to rotate relative to the inner and outer races. The grooves 30,32 extend substantially axially and have a substantially semi-circular cross-section. The ball cage 22 is positioned between the inner surface 36 of the outer race 18 and the outer surface 34 of the inner race 16, and retains the balls 20 in the Rzeppa joint 12. With this arrangement, the inner race 16 can pivot relative to the outer race 18.

The tripot joint 14 comprises the outer race 18 of the Rzeppa joint 12, which acts as an inner housing for the tripot joint, an outer housing 38, and three trunnions 40 which are substantially cylindrical. The outer housing 38 is cup-shaped and has a base 42 with an upstanding annular wall 44. The base 42 of the outer housing 38 is connected to a second shaft 46 with the longitudinal axes Y of the outer housing and the second shaft being aligned. The trunnions 40 are attached to the outer surface 48 of the outer race/inner housing 18, extend radially, and are free to slide in an axial direction in corresponding, axially extending, channels 50 formed in the inner surface 52 of the wall 44 of the outer housing 38. The trunnions 40 can also tilt in the channels 50. With this arrangement, the outer race/inner housing 18 can pivot relative to the outer housing 38. Situated inside the cup-shaped outer housing 38 between the base 42 and the Rzeppa joint 12 is a resilient mounting means 54. The resilient mounting means 54 is secured to the base 42 of the outer housing 38 by a screw 60, and is secured to the outer race/inner housing 18 by a number of screws 62. With this arrangement, the outer race/inner housing 18 is resiliently secured relative to the outer housing 38 to restrict the relative pivoting movement between the outer race/inner housing and the outer housing, as will be explained in more detail hereinafter. In this preferred embodiment, the resilient mounting means 54 comprises a laminate of a substantially circular layer 56 of elastomeric material adjacent the base 42, and a substantially circular layer 58 of resilient/rigid material (for example, steel) adjacent the outer race/inner housing 18. Other suitable forms of resilient mounting means could be used, and other arrangements for securing the resilient mounting means to the base 42 and to the outer race/inner housing 18 could also be used. The resilient mounting means 54 also provides damping for the universal joint 10, thereby helping to eliminate any generated vibrations.

When the longitudinal axes X and Y are aligned (that is when the shafts 28 and 46 are aligned), the Rzeppa joint 12 and the tripot joint 14 are substantially coaxial, and substantially concentric about centre point C. As the shafts 28,46 pivot relative to one another, between 0° and approximately 45°, the outer race/inner housing 18 remains substantially fixed relative to the outer housing 38 due to the resilient mounting means 54, and the tripot joint 14 has no effect on the transmission of torque between the two shafts 28,46 as the shafts rotate about their longitudinal axes X,Y. Between these angles, only the Rzeppa joint 12 is operating, and the universal joint 10 acts as a constant velocity joint with the torque input being substantially equal to the torque output up to an angle of approximately 42°. At approximately 45°, the first shaft 28 is in the position indicated by dotted lines 28' in Figure 2. In this position, the first shaft 28 comes into contact with the outer race/inner housing 18. For angles greater than 45° (as indicated by the dotted line position 28" of first shaft 28 in Figure 2), the tripot joint 14 comes into operation, and the universal joint 10 no longer acts as a constant velocity joint but takes on the appearance of a tripot joint. Above 45°, the outer race/inner housing 18 pivots relative to the outer housing 38 (between the axes A and A' - Figure 2) against the resilience effect of the resilient mounting means 54 as the trunnions 40 slide and tilt in their respective channels 50.

The present invention therefore meets the need of providing a universal joint which is capable of providing angles of up to approximately 60° between the two shafts, and which is simple, easy and cheap to produce. The use of cylindrical trunnions (as opposed to the outer balls of US Patent No. 3,310,960) provides an improved contact geometry for the universal joint, reducing contact loading, and thereby allowing for a reduction in the number of driving parts.

## Claims

1. A universal joint (10) for transmitting torque between two rotatable shafts (28,46) comprising an inner race (16) connectable to one of the shafts; a substantially annular outer race (18) surrounding the inner race and pivotable relative to the inner race; a ball cage (22) positioned between the inner and outer races; a plurality of balls (20) retained by the ball cage and rotatable in corresponding grooves (30,32) in the inner and outer races; a substantially annular inner housing (18) secured to and surrounding the outer race; a substantially annular outer housing (38) surrounding the inner housing and connectable to the other shaft, the inner housing being pivotable relative to the outer housing; characterised in that a number of substantially cylindrical trunnions (40) is secured to the inner housing, extending in a radial direction towards the outer housing, and slidable and tiltable in axially extending channels (50) in the outer housing; wherein the inner race, the outer race, the inner housing, and the outer housing are substantially concentric.

2. A universal joint as claimed in Claim 1, wherein the outer race (18) and the inner housing (18) are integrally formed.

3. A universal housing as claimed in Claim 1 or Claim 2, wherein the inner housing (18) can only pivot relative to the outer housing (38) when the angle between the two shafts (28,46) exceeds approximately 45°.

4. A universal joint as claimed in Claim 3, wherein a resilient mounting means (54) is secured to the inner and outer housings (18,38) to restrict the pivotal movement of the inner housing relative to the outer housing.

5. A universal joint as claimed in Claim 4, wherein the outer housing (38) is substantially cup-shaped and has a base (42) and an annular wall (44) upstanding from the base, the inner housing (18) being positioned inside and adjacent the wall, the resilient mounting means (54) being secured to the base and to the inner housing.

6. A universal joint as claimed in Claim 5, wherein the resilient mounting means (54) is a laminate comprising a first layer (56) adjacent the base (42) and a second layer (58) adjacent the inner housing (18), and wherein the second layer is harder than the first layer.

7. A universal joint as claimed in Claim 6, wherein the first layer (56) is of elastomeric material, and the second layer (58) is of steel.

## Patentansprüche

1. Universalgelenk (10) zum Übertragen von Drehmoment zwischen zwei drehbaren Wellen (28, 46), umfassend: eine innere Kugelschale (16), die mit der einen der Wellen verbunden werden kann; eine im wesentlichen ringförmige äußere Kugelschale (18), die die innere Kugelschale umgibt und relativ zu der inneren Kugelschale schwenkbar ist; einen Kugelkäfig (22), der zwischen den inneren und äußeren Kugelschalen positioniert ist; eine Vielzahl von Kugeln (20), die durch den Kugelkäfig gehalten und in entsprechenden Rillen (30, 32) in den inneren und äußeren Kugelschalen drehbar sind; ein im wesentlichen ringförmiges inneres Gehäuse (18), das an der äußeren Kugelschale gesichert ist und diese umgibt; ein im wesentlichen ringförmiges äußeres Gehäuse (38), das das innere Gehäuse umgibt und mit der anderen Welle verbunden werden kann, wobei das innere Gehäuse relativ zu dem äußeren Gehäuse schwenkbar ist; dadurch gekennzeichnet, daß eine Anzahl von im wesentlichen zylindrischen Drehzapfen (40) an dem inneren Gehäuse gesichert ist, die sich in einer radialen Richtung auf das äußere Gehäuse zu erstrecken und in sich axial erstreckenden Kanälen (50) in dem äußeren Gehäuse verschiebbar und kippbar sind; wobei die innere Kugelschale, die äußere Kugelschale, das innere Gehäuse und das äußere Gehäuse im wesentlichen konzentrisch sind.

2. Universalgelenk nach Anspruch 1, wobei die äußere Kugelschale (18) und das innere Gehäuse (18) integral gebildet sind.

3. Universalgehäuse nach Anspruch 1 oder Anspruch 2, wobei das innere Gehäuse (18) nur relativ zu dem äußeren Gehäuse (38) schwenken kann, wenn der Winkel zwischen den beiden Wellen (28, 46) näherungsweise 45° überschreitet.

4. Universalgelenk nach Anspruch 3, wobei ein federndes Befestigungsmittel (54) an den inneren und äußeren Gehäusen (18, 38) gesichert ist, um die Schwenkbewegung des inneren Gehäuses relativ zu dem äußeren Gehäuse zu begrenzen.

5. Universalgelenk nach Anspruch 4, wobei das äußere Gehäuse (38) im wesentlichen schalenförmig ist und eine Basis (42) und eine ringförmige Wand (44) aufweist, die von der Basis hochsteht, wobei das innere Gehäuse (18) innerhalb und benachbart zu der Wand positioniert ist und das federnde Befestigungsmittel (54) an der Basis und an dem inneren Gehäuse gesichert ist.

6. Universalgelenk nach Anspruch 5, wobei das federnde Befestigungsmittel (54) ein Laminat ist, das aus einer ersten Schicht (56) benachbart zur Basis (42) und einer zweiten Schicht (58) benachbart zum inneren Gehäuse (18) besteht, und wobei die zweite Schicht härter als die erste Schicht ist.

7. Universalgelenk nach Anspruch 6, wobei die erste Schicht (56) aus elastomerem Material besteht und die zweite Schicht (58) aus Stahl besteht.

## Revendications

1. Joint universel (10) pour la transmission d'un couple de torsion entre deux arbres rotatifs (28, 46) comprenant une piste de roulement interne (16) qui peut être reliée à l'un des arbres, une piste de roulement externe sensiblement annulaire (18) entourant la piste de roulement interne et qui peut pivoter par rapport à la piste de roulement interne, une cage à billes (22) disposée entre les pistes de roulement interne et externe, une série de billes (20) retenues par la cage à billes et qui peuvent tourner dans des rainures correspondantes (30, 32) des pistes de roulement interne et externe, un boîtier interne sensiblement annulaire (18) fixé à la piste de roulement externe et entourant celle-ci, un boîtier externe sensiblement annulaire (38) entourant le boîtier interne et qui peut être relié à l'autre arbre, le boîtier interne pouvant pivoter par rapport au boîtier externe, caractérisé en ce qu'un certain nombre de tourillons sensiblement cylindriques (40) sont fixés au boîtier interne, lesdits tourillons s'étendant dans une direction radiale vers le boîtier externe et pouvant glisser et basculer dans des canaux axiaux (50) du boîtier externe, le joint étant tel que la piste de roulement interne, la piste de roulement externe, le boîtier interne et le boîtier externe sont sensiblement concentriques.

2. Joint universel selon la revendication 1, dans lequel la piste de roulement externe (18) et le boîtier interne (18) sont réalisés en une seule pièce.

3. Boîtier universel selon la revendication 1 ou 2, dans lequel le boîtier interne (18) ne peut pivoter par rapport au boîtier externe (38) que lorsque l'angle entre les deux arbres (28, 46) dépasse environ 45°.

4. Joint universel selon la revendication 3, dans lequel un moyen de montage élastique (54) est fixé aux boîtiers interne et externe (18, 38) pour limiter le mouvement pivotant du boîtier interne par rapport au boîtier externe.

5. Joint universel selon la revendication 4, dans lequel le boîtier externe (38) a sensiblement la forme d'une coupe et a une base (42) et une paroi annulaire (44) qui s'élève à partir de la base, le boîtier interne (18) étant disposé à l'intérieur et au voisinage de la paroi, le moyen de montage élastique (54) étant fixé à la base et au boîtier interne.

6. Joint universel selon la revendication 5, dans lequel le moyen de montage élastique (54) est un stratifié comprenant une première couche (56) voisine de la base (42) et une seconde couche (58) voisine du boîtier interne (18), et dans lequel la seconde couche est plus dure que la première.

7. Joint universel selon la revendication 6, dans lequel la première couche (56) est constituée d'une matière élastomère et la seconde couche (58) d'acier.
